# DEMANDE DE BREVET EUROPEEN

(11) **EP 3 185 216 A1**
(43) Date de publication de la demande: **28.06.2017**
(21) Numéro de dépôt: 16204475.4
(22) Date de dépôt: 15.12.2016
(51) Int. Cl.: G06T 11/00, G01C 23/00

(54) **PROCEDE DE REPRESENTATION GRAPHIQUE D'UNE IMAGE ISSUE D'UN CAPTEUR D'IMAGE EN SUPERPOSITION SUR UNE SECONDE IMAGE SYNTHETIQUE DU PAYSAGE EXTERIEUR**

(30) Priorité: 23.12.2015 FR 1502679
(71) Demandeur: Thales, 92400 Courbevoie (FR)
(72) Inventeur: GANILLE, Thierry, 33187 LE HAILLAN Cedex (FR); LUX, Johanna, 33187 LE HAILLAN Cedex (FR); PERRIN, Baptiste, 33187 LE HAILLAN Cedex (FR); MAULET, Daniel, 33187 LE HAILLAN Cedex (FR)
(74) Mandataire: Bréda, Jean-Marc

(57) **Abrégé**

Le domaine général de l'invention est celui des procédés de représentation graphique d'une première image (EVS) issue d'un capteur d'image du paysage extérieur en superposition sur une seconde image (SVS) représentant une image synthétique du même paysage extérieur, les deux images étant affichées sur un écran de visualisation d'un système de visualisation de bord pour aéronef. La première image comporte trois zones (Z1, Z2, Z3) rectangulaires de transparence croissante, chaque zone ayant une largeur égale à celle de la première image et une hauteur déterminée, la somme des trois hauteurs étant égale à la hauteur de la première image, la première zone située en bas de l'image ayant un premier niveau constant de transparence, la troisième zone située en haut de l'image ayant un second niveau constant de transparence supérieur au premier niveau de transparence, la seconde zone située entre la première zone et la troisième zone ayant un niveau de transparence continument variable entre le premier niveau et le second niveau.

## Description

Le domaine de l'invention est celui des interfaces homme-système pour des applications aéronautiques, et plus particulièrement celui des systèmes de visualisation combinant image réelle issue d'un ou de plusieurs capteurs, et d'une image synthétique. Ces systèmes sont connus sous l'acronyme anglo-saxon « CVS », signifiant « Combined Vision System ».

Les aéronefs modernes possèdent généralement un premier système de vision synthétique dit « SVS », acronyme de « Synthetic Vision System ». Ce système permet de présenter à l'équipage une image synthétique du paysage extérieur comportant généralement des informations sur le pilotage ou la navigation. Un système SVS comporte une base de données cartographique représentative du terrain survolé, un système de géolocalisation et des moyens de calcul électroniques. L'image affichée est une vue tridimensionnelle de l'extérieur représentée de la façon la plus réaliste possible.

Ces aéronefs possèdent également un second système de visualisation dit « EVS », acronyme de « Enhanced Vision System ». Ce second système comporte un ou des capteurs qui peuvent être des capteurs optiques dans le domaine du visible ou de l'infrarouge ou de l'imagerie intensifiée, ou des lidars ou encore des radars. L'image est généralement traitée.

L'image combinée issue des images SVS et EVS est appelée CVS. Elle est affichée sur les écrans de visualisation qui se trouvent en face avant du tableau de bord de l'aéronef. Le point de vue affiché est dans l'axe de l'appareil.

L'image CVS est une solution intéressante pour mener des opérations dites « EVO », acronyme de « Equivalent Visual Operations » pour des aéronefs opérant en vol aux instruments, vol dit « IFR » pour « Instrument Flight Rules » ou encore pour améliorer la sécurité de vols des aéronefs opérant en vol à vue dégradé, vol dit « VFR » avec un environnement visuel dégradé, VFR étant l'acronyme de « Visual flight Rules ». L'image SVS améliore la conscience de la situation vis à vis du terrain éloigné alors que l'image EVS le fait pour le terrain proche, rendant la combinaison des deux images particulièrement pertinente.

La superposition des images SVS et EVS n'est pas nécessairement simple. Une des solutions possibles consiste à superposer la totalité de l'image EVS sur le SVS, masquant ainsi une partie utile du SVS, éventuellement avec un recalage du SVS sur l'EVS par identification d'un élément remarquable comme une piste d'atterrissage, ce qui limite les cas d'utilisation à, par exemple, l'atterrissage sur piste. Une seconde solution est de n'afficher l'image EVS que sous l'horizon et de n'afficher l'image SVS qu'au-dessus de l'horizon. Cette solution en tout ou rien ne tire pas toujours partie de tout le potentiel des deux images. Une troisième solution consiste à détecter les zones avec un contraste supérieur à un seuil dans l'image EVS et de ne superposer que ces zones sur l'image SVS. Là encore, le risque de pertes d'informations utiles n'est pas négligeable.

Le procédé selon l'invention ne présente pas les inconvénients des solutions précédentes. Le procédé repose sur la découpe de l'image EVS en trois parties distinctes. La partie basse de l'image EVS a une opacité maximale et peut potentiellement masquer totalement l'image SVS, la partie haute de l'image EVS a une opacité minimale et la partie intermédiaire présente l'image EVS avec un dégradé d'opacité entre la valeur maximale en bas et minimale en haut. Plus précisément, l'invention a pour objet un procédé de représentation graphique d'une première image issue d'un capteur d'image du paysage extérieur en superposition sur une seconde image représentant une image synthétique du même paysage extérieur, les deux images étant affichées sur un écran de visualisation d'un système de visualisation de bord pour aéronef, caractérisé en ce que la première image comporte trois zones rectangulaires de transparence croissante, chaque zone ayant une largeur égale à celle de la première image et une hauteur déterminée, la somme des trois hauteurs étant égale à la hauteur de la première image, la première zone située en bas de l'image ayant un premier niveau constant de transparence, la troisième zone située en haut de l'image ayant un second niveau constant de transparence supérieur au premier niveau de transparence, la seconde zone située entre la première zone et la troisième zone ayant un niveau de transparence continument variable entre le premier niveau et le second niveau.

Avantageusement, la hauteur de la première zone représente 30% de la hauteur de l'image, la hauteur de la seconde zone représente 50% de la hauteur de l'image et la hauteur de la troisième zone représente 20% de la hauteur de l'image.

Avantageusement, le premier niveau de transparence est nul ou voisin de zéro et en ce que le second niveau de transparence est voisin de 100%.

Avantageusement, la loi de variation du niveau de transparence de la seconde zone est linéaire.

Avantageusement, les hauteurs des trois zones sont réglables de façon manuelle par un utilisateur.

Avantageusement, les hauteurs des trois zones sont réglables de façon automatique par le système avionique de bord en fonction de la phase de vol de l'aéronef.

Avantageusement, les hauteurs des trois zones sont réglables de façon automatique par le système avionique de bord en fonction d'un ou plusieurs paramètres de l'aéronef comme le tangage, l'altitude ou la radio-altitude.

Avantageusement, les hauteurs des trois zones sont réglables de façon automatique par le système avionique de bord en fonction d'une distance du terrain dans le champ du capteur calculée à partir de la base de données du terrain.

Avantageusement, les hauteurs des trois zones sont réglables de façon automatique par le système avionique de bord en fonction de la limite de visibilité du capteur d'image.

Avantageusement, le premier niveau de transparence et/ou le second niveau de transparence varient en fonction de l'altitude de l'aéronef lorsque l'aéronef s'élève, de façon que la première image soit de plus en plus transparente en fonction de l'altitude, les changements de niveaux de transparence débutant à un premier seuil de basse altitude et finissant à un second seuil de haute altitude, la première image étant totalement transparente à ce second seuil.

Avantageusement, le premier niveau de transparence et/ou le second niveau de transparence varient en fonction de l'altitude de l'aéronef lorsque l'aéronef descend, de façon que la première image soit de plus en plus opaque en fonction de l'altitude, les changements de niveaux de transparence débutant à un troisième seuil de haute altitude et finissant à un quatrième seuil de basse altitude, la première image étant totalement transparente au troisième seuil.

Avantageusement, le premier seuil et le quatrième seuil ont des valeurs différentes et/ou le second seuil et le troisième seuil ont des valeurs différentes.

L'invention sera mieux comprise et d'autres avantages apparaîtront à la lecture de la description qui va suivre donnée à titre non limitatif et grâce aux figures annexées parmi lesquelles :
La figure 1 représente les différentes zones de la première image issue d'un capteur ;
La figure 2 représente selon un axe vertical la variation de transparence de la première image ;
La figure 3 représente un affichage comportant la superposition de la première image sur la seconde image.

Le procédé selon l'invention est mis en oeuvre dans un système avionique pour aéronef. Celui-ci comporte au moins un système de visualisation synthétique et un ou des capteurs d'image.

Le système de visualisation synthétique ou SVS comporte au moins une base de données cartographique, des moyens de géolocalisation, des moyens électroniques permettant de calculer une représentation des principaux paramètres de l'aéronef, un calculateur graphique et au moins un dispositif de visualisation. Les moyens de géolocalisation sont, à titre d'exemple, de type « GPS », acronyme de « Global Positioning System » couplés/hybridés ou non avec des centrales inertielles.

Le second système de visualisation dit « EVS », acronyme de « Enhanced Vision System » comporte un ou des capteurs qui peuvent être des capteurs optiques dans le domaine du visible ou de l'infrarouge ou de l'imagerie intensifiée, ou des lidars ou encore des radars. L'image est généralement traitée.

Dans ce qui suit, on emploie les termes d'opacité et de transparence. Le niveau d'opacité d'une image exprimé en pourcentage est égal à 100% moins son niveau de transparence exprimé en pourcentage.

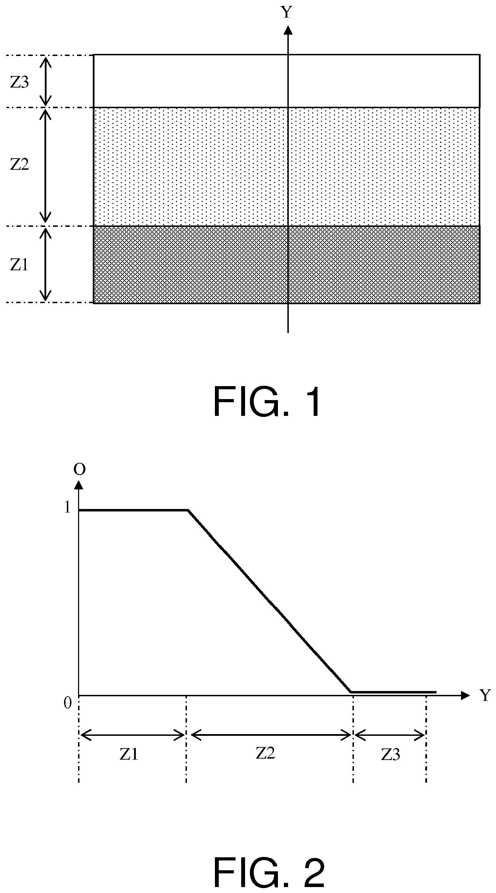

Dans le procédé selon l'invention, l'image EVS est découpée en trois zones rectangulaires distinctes et connexes de bas en haut comme on le voit sur la figure 1. Sur cette figure, les zones sont notées Z1, Z2 et Z3. La partie basse Z1 présente l'image EVS avec une opacité maximale ou, ce qui revient au même, une transparence minimale, la partie haute Z3 représente l'image EVS avec une opacité minimale ou une transparence maximale et la partie intermédiaire Z2 présente l'image EVS avec un dégradé d'opacité entre la valeur maximale en bas et minimale en haut ou avec un dégradé de transparence entre la valeur minimale en bas et maximale en haut.

Pour donner des ordres de grandeur, la hauteur de la première zone Z1 représente 30% de la hauteur de l'image, la hauteur de la seconde zone Z2 représente 50% de la hauteur de l'image et la hauteur de la troisième zone Z3 représente 20% de la hauteur de l'image. D'autres répartitions sont possibles.

Comme représenté en figure 2, l'opacité de chaque point dans la zone intermédiaire Z2 est une fonction de sa distance sur l'axe vertical Y au bord inférieur de l'image selon une loi de variation diminuant constamment. La loi de variation peut être de différente nature. Sur la figure 2, la loi de variation est linéaire. D'autres variations sont possibles.

A titre d'exemple, le premier niveau de transparence est nul ou voisin de zéro et le second niveau de transparence est voisin de 100%. Plus précisément, le second niveau de transparence est supérieur à 80% et strictement inférieur à 100%.

La répartition des trois zones peut être constante et indépendante des phases de vol de l'aéronef. Une variante du procédé selon l'invention consiste à rendre variable la répartition des trois zones. Différents modes sont alors intéressants :
- Un mode manuel ou le pilote règle à partir d'une commande unique la répartition des trois zones ;
- Un mode automatique ou la répartition des zones est fonction d'un ou plusieurs paramètres de l'aéronef, par exemple le tangage, l'altitude ou encore la radio-altitude. Ainsi, plus l'aéronef s'approche du sol et/ou plus l'aéronef prend un tangage négatif, plus la zone Z1 s'agrandit ;
- Un mode automatique ou la répartition des zones est fonction de la détection dans l'image EVS d'une droite horizontale moyennant la limite de visibilité du capteur à un temps donné. Cette détection repose sur une analyse des contrastes dans l'image EVS.
- Un mode automatique ou la répartition des zones est fonction de la détection dans l'image SVS d'une droite horizontale passant par le point le plus bas dans le champ du capteur dont la distance à l'aéronef est supérieure à une valeur donnée, par exemple 500 mètres.

Lorsque l'aéronef est très haut au-dessus du terrain, l'image EVS n'a plus d'intérêt et on présente une image SVS seule. Une solution possible pour éviter l'apparition ou la disparition brutale de la première image, consiste à introduire une transition douce entre l'image SVS seule et l'image EVS composée des trois zones rectangulaires décrites précédemment, lorsque l'aéronef s'approche du sol ou s'en éloigne.

Dans ce cas, le premier niveau de transparence et/ou le second niveau de transparence varient en fonction de l'altitude de l'aéronef lorsque l'aéronef s'élève, de façon que la première image soit de plus en plus transparente en fonction de l'altitude, les changements de niveaux de transparence débutant à un premier seuil de basse altitude appelé seuil de début de disparition et finissant à un second seuil de haute altitude appelé seuil de fin de disparition, la première image étant totalement transparente à ce second seuil.

Le premier niveau de transparence et le second niveau de transparence varient également en fonction de l'altitude de l'aéronef lorsque l'aéronef descend, de façon que la première image soit de plus en plus opaque en fonction de l'altitude, les changements de niveaux de transparence débutant à un troisième seuil de haute altitude appelé seuil de fin d'apparition et finissant à un quatrième seuil de basse altitude appelé seuil de début d'apparition, la première image étant totalement transparente au troisième seuil.

Ces seuils d'apparition et de disparition ne sont pas nécessairement confondus. Avantageusement, le seuil de début de disparition est supérieur au seuil de début d'apparition et, de la même façon, le seuil de fin de disparition est supérieur au seuil de fin d'apparition.

A titre d'exemple, la variation de transparence moyenne de la première image peut être linéaire en fonction de l'altitude entre les seuils d'apparition et de disparition. D'autres variations son possibles.

On définit ces seuils d'apparition et de disparition de façon à éviter des apparitions et disparitions fugitives, quelque soit le profil du vol et la nature du terrain.

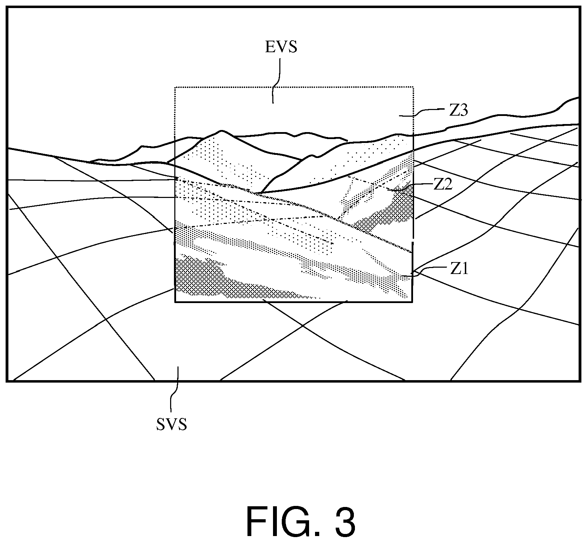

A titre d'exemple, la figure 3 représente l'intégration d'une image EVS dans une image SVS obtenue avec le procédé selon l'invention. L'image SVS comporte des lignes d'une grille qui disparaissent en bas de l'image EVS dans la zone Z1 qui est totalement opaque et qui réapparaissent dans la zone Z2 au fur et à mesure qu'elles se trouvent plus haut dans l'image EVS qui est de plus en plus transparente et totalement transparente dans la zone Z3.

## Revendications

1. Procédé de représentation graphique d'une première image (EVS) issue d'un capteur d'image du paysage extérieur en superposition sur une seconde image (SVS) représentant une image synthétique du même paysage extérieur, les deux images étant affichées sur un écran de visualisation d'un système de visualisation de bord pour aéronef, **caractérisé en ce que** la première image comporte trois zones (Z1, Z2, Z3) rectangulaires de transparence croissante, chaque zone ayant une largeur égale à celle de la première image et une hauteur déterminée, la somme des trois hauteurs étant égale à la hauteur de la première image, la première zone située en bas de l'image ayant un premier niveau constant de transparence, la troisième zone située en haut de l'image ayant un second niveau constant de transparence supérieur au premier niveau de transparence, la seconde zone située entre la première zone et la troisième zone ayant un niveau de transparence continument variable entre le premier niveau et le second niveau.

2. Procédé de représentation graphique selon la revendication 1, **caractérisé en ce que** la hauteur de la première zone (Z1) représente 30% de la hauteur de l'image, la hauteur de la seconde zone (Z2) représente 50% de la hauteur de l'image et la hauteur de la troisième zone (Z3) représente 20% de la hauteur de l'image.

3. Procédé de représentation graphique selon la revendication 1, **caractérisé en ce que** le premier niveau de transparence est nul ou voisin de zéro et **en ce que** le second niveau de transparence est supérieur à 80% et strictement inférieur à 100%.

4. Procédé de représentation graphique selon la revendication 1, **caractérisé en ce que** la loi de variation du niveau de transparence de la seconde zone est linéaire.

5. Procédé de représentation graphique selon la revendication 1, **caractérisé en ce que** les hauteurs des trois zones sont réglables de façon manuelle par un utilisateur.

6. Procédé de représentation graphique selon la revendication 1, **caractérisé en ce que** les hauteurs des trois zones sont réglables de façon automatique par le système avionique de bord en fonction de la phase de vol de l'aéronef.

7. Procédé de représentation graphique selon la revendication 1, **caractérisé en ce que** les hauteurs des trois zones sont réglables de façon automatique par le système avionique de bord en fonction d'un ou plusieurs paramètres de l'aéronef comme le tangage, l'altitude ou la radio-altitude.

8. Procédé de représentation graphique selon la revendication 1, **caractérisé en ce que** les hauteurs des trois zones sont réglables de façon automatique par le système avionique de bord en fonction d'une distance du terrain dans le champ du capteur calculée à partir de la base de données du terrain.

9. Procédé de représentation graphique selon la revendication 1, **caractérisé en ce que** les hauteurs des trois zones sont réglables de façon automatique par le système avionique de bord en fonction de la limite de visibilité du capteur d'image.

10. Procédé de représentation graphique selon la revendication 1, **caractérisé en ce que** le premier niveau de transparence et/ou le second niveau de transparence varient en fonction de l'altitude de l'aéronef lorsque l'aéronef s'élève, de façon que la première image soit de plus en plus transparente en fonction de l'altitude, les changements de niveaux de transparence débutant à un premier seuil de basse altitude et finissant à un second seuil de haute altitude, la première image étant totalement transparente à ce second seuil.

11. Procédé de représentation graphique selon la revendication 1, **caractérisé en ce que** le premier niveau de transparence et le second niveau de transparence varient en fonction de l'altitude de l'aéronef lorsque l'aéronef descend, de façon que la première image soit de plus en plus opaque en fonction de l'altitude, les changements de niveaux de transparence débutant à un troisième seuil de haute altitude et finissant à un quatrième seuil de basse altitude, la première image étant totalement transparente au troisième seuil.

12. Procédé de représentation graphique selon l'une des revendications 10 et 11, **caractérisé en ce que** le premier seuil et le quatrième seuil ont des valeurs différentes et/ou le second seuil et le troisième seuil ont des valeurs différentes.
